# EUROPEAN PATENT APPLICATION

(11) **EP 1 313 028 A2**
(43) Date of publication of application: **21.05.2003**
(21) Application number: 02020671.0
(22) Date of filing: 13.09.2002
(51) Int. Cl.: G06F 15/78

(54) **System-on-chip architecture that utilizes feram and re-configurable hardware**

(30) Priority: 20.11.2001 US 989667
(71) Applicant: Agilent Technologies, Inc., Palo Alto, CA 94306 (US)
(72) Inventor: Joseph, Francis, Sunnyvale, CA 94087 (US)
(74) Representative: Liesegang, Roland, Dr.-Ing.

(57) **Abstract**

The present invention provides a System-On-Chip (SOC) architecture (20) that utilizes an embedded ferroelectric memory component (23) to store information so that in the event that power is removed from the system, when power returns, the processor (21) of the SOC (20) can resume execution at the point at which it was executing in an instruction set when power was removed. The SOC architecture (20) preferably also includes re-configurable hardware (22) to enable the SOC (20) to be easily re-configured and to have good performance characteristics. The configuration and current execution state of the re-configurable hardware (22) may also be stored in the ferroelectric memory component (23) so that if power cycle occurs, the re-configurable hardware (22) can resume execution at the point at which it was executing when power was lost. The re-configurable hardware (22) may also have its own ferroelectric memory component embedded therein to enable the configuration of the hardware and its current execution state to be stored in the ferroelectric memory component of the re-configurable hardware (22).

## Description

### TECHNICAL FIELD OF THE INVENTION

The present invention relates to System-On-Chip (SOC) architectures and, more particularly, to an SOC architecture that comprises Ferroelectric memory (FeRAM or FRAM) and associated re-configurable hardware.

### BACKGROUND OF THE INVENTION

Currently, a large demand exists for small computing devices with great functionality and diversity. Also, there is an ever-increasing demand for computing products with new features and capabilities, which has driven down market windows (i.e., the time period during which a product should be brought to market in order to meet demand and maximize market share relative to other competitors). These factors, along with the seemingly endless ability to fit increasingly greater numbers of transistors per square inch in an integrated circuit (IC), have lead to the development of various System-On-Chip (SOC) architectures, which are entire computing systems on a single IC.

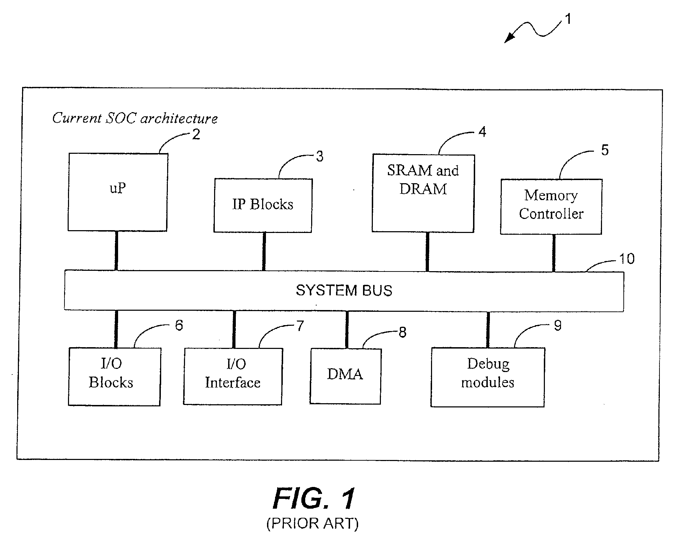

Although SOC architectures can take on a variety of forms (e.g., Application Specific Integrated Circuits (ASICs), Field Programmable Gate Arrays (FPGAs), etc.), the SOC architecture that is currently available is generally of the form shown in the block diagram of Fig. 1. As shown in Fig. 1, the general SOC architecture 1 includes a microprocessor 2 (or microcontroller), intellectual property (IP) blocks 3, a memory block 4 comprised of a static and dynamic random access memory (SRAM and DRAM) component, a memory controller 5, input/output (I/O) blocks 6, an I/O interface 7, direct memory access (DMA) 8 and debugging modules 9. It is typically considered preferable to embed the debugging modules 9 in the SOC 1 to enable testing of the configuration of the SOC to be performed more quickly than if testing were performed from outside of the SOC 1 using external debugging devices.

The intellectual property (IP) blocks 3 are generally referred to as such to denote hardware that is generally considered to be of a proprietary nature. Once the IP blocks have been designed and the design has been tested and verified, the IP blocks can be reused in SOCs by the owner of the IP technology (and/or by licensed parties), even if the SOCs are used for different purposes and/or have different features. This reuse of the IP technology is important in reducing the amount of time required to bring the product to market.

The memory controller 5 controls the transfer of information over the system bus 10 among the components interfaced to the system bus 10. The microprocessor 2 is programmed with software to control the operations of the SOC 1, including the storage of data in and the retrieval of data from SRAM and DRAM memory component 4. The I/O interface 7 operates in conjunction with hardware of the I/O blocks 6 to ensure that data input to the SOC 1 is formatted to be compatible with the SOC 1, and to ensure that data output from the SOC 1 is formatted appropriately. The I/O interface 7 may be, for example, a Universal Serial Bus (USB) or a Peripheral Component Interconnect (PCI). The DMA 8 speeds up the transfer of data to and from the I/O interface 7 to and from the SRAM and DRAM memory block 4 without using the system bus 10, thereby enhancing the performance of the SOC 1 with respect to I/O transfers.

The I/O blocks 6 generally are comprised of fixed hardware that performs particular functions. Likewise, the IP blocks 3 generally are comprised of fixed hardware that performs particular functions. In other words, once the hardware has been configured, it generally is not capable of being re-configured. Software or firmware stored in the SRAM and DRAM component 4 can be changed so that the microprocessor 2 can perform different functions in conjunction with the IP hardware 3 and/or the I/O hardware 6, which enables the SOC 1 to be setup relatively easily for the pre-planned applications. This also allows the same SOC architecture to extend the use of the original application within the bounds of the original design.

SRAM is a volatile memory element that generally is capable of very fast access rates. Typically, the microprocessor or microcontoller of the SOC uses SRAM to perform high-speed calculations. DRAM is a volatile memory element that generally is a very high-density memory, but is relatively slow in terms of access time. For this reason, DRAM is typically used in SOCs for storing large amounts of data that the microprocessor or microcontroller needs to be able to access relatively frequently, but not at fast access rates. For example, after power-up, an SOC stores all information about the I/O devices, current and future instructions, application information, program threads, data values, etc., in the DRAM. SRAM, on the other hand, is typically used in SOCs for storing small instruction sequences and data that need to be accessed at high speeds.

One of the disadvantages of an IC such as the SOC 1 shown in Fig. 1 is that, during a power down situation, all of the information stored in the DRAM and the SRAM is lost due to the volatile nature of these types of memory elements. Therefore, it is necessary for the IC to be booted up (i.e., rebooted) and initialized each time a power cycle occurs, which corresponds to the time period that begins at the time at which power to the IC is removed and ends at the time at which power to the IC returns. Every time such an event occurs, the data stored in the SRAM/DRAM memory block 4 is lost and the microprocessor 2 loses its location of instruction execution. Because the data stored in the SRAM/DRAM memory block 4 is lost when a power cycle occurs, even if the IP hardware block used in an SOC is re-configurable, it could not be reconfigured with data stored in the SRAM/DRAM block 4 because that data has been lost. Therefore, the occurrence of a power cycle requires that the microprocessor 2 be rebooted and that the data that was stored in the SRAM/DRAM memory block 4 be restored via the microprocessor 2.

Aside from SRAM and DRAM memory elements, the memory block 4 of an SOC may also include a programmable read only memory (PROM) element or, alternatively, a read only memory (ROM)). Although these memory elements are normally nonvolatile (i.e., the data stored in them is not lost when power is temporarily removed), these types of memory elements typically are not used, or are only used to a very limited extent, in SOCs for other reasons. For example, because PROM is relatively slow and relatively costly to embed, this type of memory element is very rarely used in an SOC. Although ROM can be relatively easy and inexpensive to embed and can be very fast, it is a one-time programmable device, and thus is not typically used in SOC architectures.

If PROM or ROM is used in an SOC, it is not for the purpose of writing and re-writing data in the SOC. PROM or ROM is sometimes used in an SOC for the purpose of storing boot-up instructions, i.e., the initial commands executed by the microprocessor or microcontroller of the SOC for the purposes of retrieving various types of start-up information from the PROM or ROM that the SOC needs in order to begin operating such as, for example, the addresses of the I/O blocks 6 on the system bus 10.

Although other types of nonvolatile memory exists that is capable of providing very fast access times, they generally are not suited for being embedded in a SOC using standard process technologies, such as a standard CMOS processing technology. A Ferroelectric capacitor has the property of being bi-stable. Therefore, it can be used as a non-volatile memory device, typically known as Ferroelectric Random Access Memory (FeRAM or FRAM). The Ferroelectric RAM has a geometry that is comparable to that of the standard DRAM and has a speed close to that of the SRAM. Also, FeRAM has data access times comparable to, or faster than, DRAM data access times, and only slightly less than those of SRAM. However, due to limitations in process technologies, this type of memory device typically generally is available only as a stand-alone memory device (e.g., used in smart cards), which is not be a suitable for use as an embedded memory in an SOC.

Several years ago, RAMTRON Corporation of Colorado developed a customized IC fabrication process that enables stand-alone FeRAM (FRAM) capacitors to be created, which currently are widely available from various manufacturers. However, these capacitors produced by RAMTRON and other manufacturers have very large geometries and slow access times, which makes them impractical for use in SOC applications.

Another disadvantage of an IC such as the SOC 1 shown in Fig. 1 is that its performance is limited by the availability of suitable software or firmware for execution by the microprocessor or microcontroller. Furthermore, because both firmware and software are executed in serial fashion by the microprocessor or microcontroller of the SOC, performance of the SOC is limited by the processing ability of the microprocessor or microcontroller.

Accordingly, a need exists for an SOC that enables FeRAM, which is a non-volatile memory device, to be embedded in the SOC in such a way that area and scalability goals are met, while also obviating the need to re-boot in the event that a power cycle occurs. A need also exists for an SOC having a processing capability that is limited only to a very small extent by the processing ability of the microprocessor or microcontroller of the SOC.

### SUMMARY OF THE INVENTION

The present invention provides an SOC architecture that comprises an embedded Ferroelectric memory component, such as a Ferroelectric Random Access Memory (FeRAM), for storing information. In accordance with the present invention, it has been determined that current IC processing technologies, such as Complementary Metal Oxide Semiconductor (CMOS) technology, for example, can be used to embed FeRAM in an IC without requiring the use of large amounts of area on the IC. Thus, it has been determined that FeRAM can be embedded in an SOC, and because of the nonvolatile nature of FeRAM, information stored therein will not be lost in the event that a power cycle occurs. Also, this allows a single processing technology, such as CMOS technology, to be used to fabricate all of the components of the SOC. This, in turn, allows the benefits of such a processing technology, such as high packing density and high speed, to be realized by the SOC.

In accordance with the present invention, it has been determined that a single Ferroelectric Random Access Memory (FeRAM) component is sufficient to store all of the aforementioned types of data that is normally stored in SRAM and DRAM memory components of an SOC. FeRAM has data access times comparable to, or faster than DRAM data access times, and only slightly less than those of SRAM. Therefore, FeRAM can be used to perform the functions of both SRAM and DRAM. Furthermore, because FeRAM is nonvolatile, data stored in FeRAM is not lost in the event of a power cycle.

In accordance with the present invention, it has been determined that Ferroelectric capacitors can be embedded very effectively using standard process technology, preferably a standard CMOS process technology. Also, In accordance with the present invention, it has been determined that the embedded Ferroelectric capacitor is scalable with the newer CMOS process technologies. In other words, as newer CMOS process technologies evolve that enable IC components to be made ever increasingly smaller, the embedded Ferroelectric capacitor of the present invention is scalable to the same degree as other IC components. These FeRAM capacitors are of much smaller geometry than prior known FeRAM capacitors, have very fast access time and can be easily embedded using a standard IC process technology, such as a standard CMOS process technology. It has been determined, in accordance with the present invention, that these and other factors, which were not known prior to the present invention, have now made it very attractive to integrate Ferroelectric capacitors into SOCs.

Because the FeRAM of the present invention has geometrical embedding characteristics similar to those of standard CMOS components often used for the creation of an SOC, an easy way is provided to enable all of the SOC components, including the FeRAM, to be embedded on a standard CMOS wafer with virtually no increase in overhead relative to SOCs that utilize CMOS processes to create SOCs that include SRAM and DRAM. Furthermore, because FeRAM is scalable with the latest generation of process technologies, then as processing technologies evolve or are developed that enable component sizes to be further scaled down, the FeRAM will also be capable of being scaled down accordingly.

This has several additional advantages over the prior art SOC architectures. For example, an instruction set and the location at which the processor of the SOC is executing in the instruction set, as well as any results of prior instruction execution, can be stored in the FeRAM. If a power cycle does occur, then when power returns, the processor can begin executing where it stopped executing when power was lost. This obviates the need for rebooting the SOC and restarting execution of a program at its beginning when power returns.

In addition to a microprocessor or microcontroller, the SOC architecture of the present invention preferably also utilizes re-configurable hardware such as, for example, a Field Programmable Gate Array (FPGA), that enables the SOC to be easily configured and re-configured to perform a variety of different applications. Furthermore, if the configuration and current execution results of the re-configurable hardware are stored in the FeRAM memory component, the re-configurable hardware can easily recover and continue execution after a power cycles has occurred. Preferably, an additional FeRAM component is embedded in the re-configurable hardware. For example, it is known to include SRAM in re-configurable hardware, such as an FPGA. By including FeRAM directly in the re-configurable hardware of the present invention, the configuration of the hardware can be stored directly therein so that, in the event of a power cycle, the configuration of the hardware is not lost and is readily available for configuring the hardware when power returns.

These and other features and advantages of the present invention will become apparent from the following description, drawings and claims.

### BRIEF DESCRIPTION OF THE DRAWINGS

Fig. 1 is a block diagram of a prior art SOC architecture.
Fig. 2 is a block diagram of an example embodiment of the SOC architecture of the present invention, which incorporates re-configurable hardware instead of IP blocks and an FeRAM memory component instead of an SRAM/DRAM memory component.
Fig. 3 is a block diagram of an example embodiment of the SOC architecture of the present invention, which incorporates re-configurable hardware in addition to IP blocks and an FeRAM memory device in addition to an SRAM/DRAM memory component.

### DETAILED DESCRIPTION OF THE INVENTION

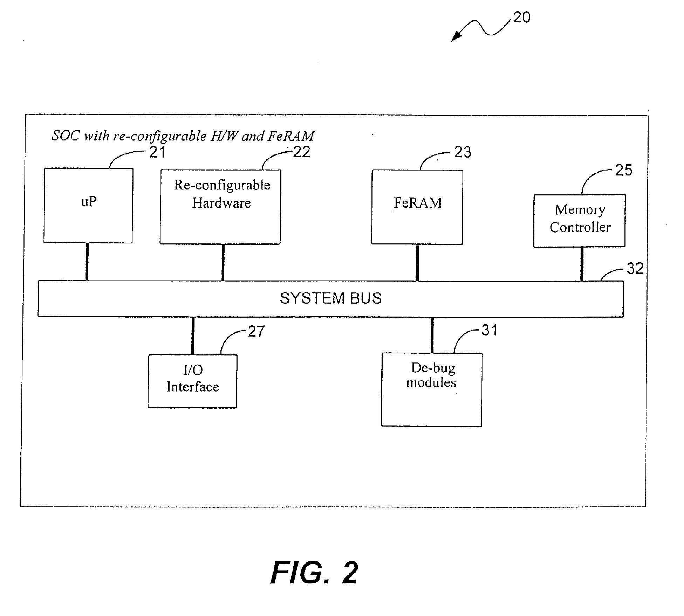

Fig. 2 is a block diagram illustrating an example embodiment of the SOC architecture 20 of the present invention. The components in Fig. 2 that have identical names as those in Fig. 1 may be identical to those components in Fig. 1. However, it is not necessary to the present invention that the SOC 10 of Fig. 2 include components 3, 4, 6, 8 or 9. It is only necessary that the SOC 10 include the microprocessor 21, the re-configurable hardware 22, which may be dynamically re-configurable (i.e., re-configurable on the fly), the FeRAM memory component 23, the I/O interface 27 and the system bus 32. The debug modules 31 are not necessary for the SOC 20 to operate, but are desirable because testing typically must be performed on the various components of the SOC 20 to ensure that certain qualifications are met. Placing the debug modules on the chip facilitates testing and reduces the time-to-market for the SOC 20. However, testing of the components of the SOC 20 could be performed from outside of the SOC, as will be understood by those skilled in the art.

In accordance with the embodiment shown in Fig. 2, the instructions that are to be executed by the microprocessor 21 to cause the microprocessor to configure the re-configurable hardware 22 are stored the FeRAM component 23 or in a separate FeRAM component (not shown) embedded in the re-configurable hardware 22 itself. Also, any other data, instructions, or code needed for the SOC 20 to perform its special functions are also stored in the FeRAM component 23. A separate ferroelectric memory component may be embedded directly in the re-configurable hardware 22 to enable the execution state and the configuration of the re-configurable hardware 22 to be stored directly within the re-configurable hardware 22. This, in turn, would make this information readily available to the re-configurable hardware 22, which would allow the re-configurable hardware 22 to recover its configuration and execution state after a power cycle without the need for assistance from the microprocessor 21. Examples in which the use of ferroelectric memory components would be preferred include situations in which an SOC is used in handheld devices such as Personal Digital Assistants (PDAs), cellular telephones, or any other application where re-booting of the computer system due to the occurrence of a power cycle is undesirable or intolerable. This may includes situations in which functions such as Motion Pictures Experts Group (MPEG) video, Orthogonal Frequency Division Multiplexing (OFDM), and Code Division Multiple Access (CDMA) codecs are embedded in the SOC.

Also, as stated above, memory location(s) in FeRAM component 23 preferably are used to store the address pointer of the instruction (or string of instructions) currently being executed by the microprocessor 21 as well as the address pointer of the next instruction (or string of instructions) to be executed by the microprocessor 21. Therefore, if a power cycle occurs, not only is the data stored in FeRAM component 23 preserved, the point of execution of the microprocessor 21 is immediately recoverable when power returns. When power is returned, the microprocessor 21 simply accesses the address pointers and resumes executing the instructions stored in the locations in the FeRAM component 23 identified by the address pointers. Therefore, in the event of a power cycle, the register values are recalled during power-up, thereby resulting in instant turn on of the SOC 10. Consequently, rebooting and re-initialization after the occurrence of a power cycle is unnecessary.

Also, the basic, or overall, functionality of the SOC 20 can be modified at any time by re-configuring the re-configurable hardware 22 and/or, to some extent, by reprogramming the microprocessor 21. By using both FeRAM 23 and re-configurable hardware 22, the SOC 20 is provided with excellent performance as well as enhanced flexibility and faster implementation of applications. The same re-configurable hardware 22 can be used in the SOC 20 for totally different applications, while achieving performance levels similar to that of an ASIC.

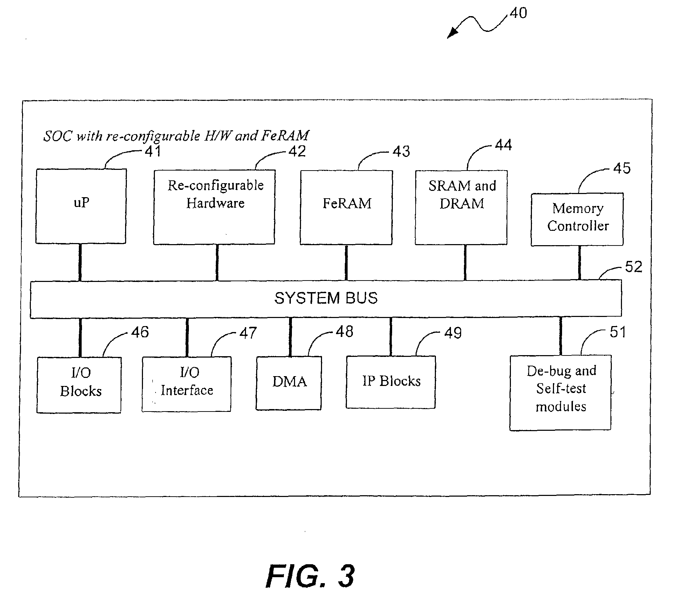

Fig. 3 illustrates a block diagram of another example embodiment of the SOC 40 of the present invention, which additionally includes components shown in Fig. 1 that were not included in the SOC of the embodiment shown in Fig. 2. Complex and high performance IP blocks 49 can be included to further enhance the performance and versatility of the SOC 40. This embodiment also takes advantage of DMA 48 and I/O hardware blocks 46 to optimize I/O functionality. In addition, an SRAM and DRAM component 44 is included to take advantage of the fast data access time of SRAM and the mass data storage capabilities of DRAM. In this case, the FeRAM 43 may be used to store, for example, only program address and instruction values and/or data that, if lost, will result in an increase in the amount of time required for the SOC 40 to perform a particular function or task.

For example, if the SRAM component 44 is used only to store short-term results of data currently being processed, then during a power cycle, if the short-term results stored in the SRAM are lost, this will not necessarily affect the continued execution of the program when power is returned to the SOC 40. This is because all of the crucial information relating to the program counter, program instructions, necessary data values, etc., has been stored in the non-volatile FeRAM component 43. Therefore, after the occurrence of the power cycle, the system of the SOC 40 will know exactly where it was prior to the occurrence of the power cycle. In addition to storing the results of execution as the results are accumulated, parameters and variables used by the algorithm being executed by the microprocessor 41 and/or by the re-configurable hardware 42 preferably are also stored in FeRAM so that this information also would not be lost in the event that a power cycle occurs.

The re-configurability of the SOCs 20 and 40 makes the SOC architecture of the present invention very suitable for web-based appliance implementations and software-defined appliances and instruments because the SOC of the present invention can be configured (and re-configured) over the Internet or over wired or wireless cummunication media, to perform a wide variety of the desired set of functions. Also, the architecture of the SOC of the present invention reduces the time-to-market period for an SOC product. For example, a product employing the SOC 20 or 40 could be introduced into the market at a point in time when the SOC has been configured to perform most of its functions for a particular use application, but before extensive, time-consuming testing qualifications have been met. Any necessary testing or final enhancements to the SOC may be made at a later time over the Internet (i.e., after the product has been introduced into the market).

For example, instructions could be sent over the Internet using the Transmission Control Protocol over Internet Protocol (TCP/IP). With reference to Fig. 3, for example purposes, the I/O interface 47 would receive the data and, in conjunction with the I/O hardware 46 and/or the microprocessor 41, perform the necessary Open Systems Interconnect (OSI) lower layer processing functions (i.e., Media Access Control (MAC) layer and Physical layer processing) to decode the transmitted instructions. This information preferably would then be stored in the non-volatile FeRAM component 43, and the re-configurable hardware 42 could then be re-configured by the microprocessor 41 using this information. This could be done in for test results that have been output over the Internet via the I/O interface 47 in association with tests performed by the debug/self-test module 51, or simply for performance enhancement purposes.

Other advantages of the present invention are that the re-configurable hardware 22 and 42 of the SOCs 20 and 40, respectively, can be used for multiple functions. This enhances the reusability of IP, which is a very important issue when selecting an SOC architecture. In addition, the SOC architecture of the present invention takes full advantage of process technology scaling because neither the FeRAM 23 and 43 nor the re-configurable hardware 22 and 42 present integration problems, and both are scalable using current IC processing technologies, such as CMOS fabrication processes, as stated above with reference to Fig. 2.

It should be noted that the present invention has been described with reference to an example embodiment. The present invention is not limited to the example embodiment described herein. As stated above, many of the components of the SOC 40 shown in Fig. 3 are optional, but are preferred for the aforementioned reasons. For example, the FeRAM 43 can perform the functions typically performed by the SRAM and DRAM, and thus the SRAM and DRAM component 44 is not necessary. It is, however, preferable to utilize the SRAM and DRAM component 44 in conjunction with the FeRAM component 43 because doing so enhances overall performance of the SOC. Similarly, the IP blocks 49 shown in Fig. 3 perform functions that could instead be performed by the re-configurable hardware 42, but including both components enhances the performance and versatility of the SOC. Those skilled in the art will understand that other modifications can be made to the SOC architectures shown in Figs. 2 and 3 without deviating from the scope of the present invention. Any such modifications are within the scope of the present invention. It should also be noted that the present invention is not limited to the IC processing technology used to create the SOC. For example, although CMOS processing technologies were specifically mentioned herein, those skilled in the art will understand, in view of the discussion provided herein, that other IC processing technologies may be used as well. The CMOS processing technology is merely an example of one type of processing technology that is suitable for use with the present invention, primarily due to the associated speed, compatibility, area and scalability features.

## Claims

1. A System-On-Chip (SOC) architecture (20) comprising:
a system bus (32);
a processor (21) in communication with the system bus (32);
an input/output (I/O) interface (27) in communication with the system bus (32); and
a ferroelectric memory (23) component in communication with the system bus (32).

2. The SOC (20) of claim 1, further comprising debugging and self-test modules (51) in communication with the system bus (32).

3. The SOC (20) of claim 1 or 2, further comprising a direct memory access (DMA) component (48) in communication with the system bus (32).

4. The SOC (20) of any of claims 1 to 3, further comprising a memory controller (25) in communication with the system bus (32):

5. The SOC (20) of any of claims 1 to 4, further comprising re-configurable hardware (22) in communication with the system bus (32).

6. The SOC (20) of claim 5, wherein the re-configurable hardware (22) has a ferroelectric memory component embedded therein, and wherein the re-configurable hardware (22) has a configuration that is stored in the ferroelectric memory component embedded in the re-configurable hardware (22).

7. The SOC (20) of claim 6, wherein the ferroelectric memory component embedded in the re-configurable hardware (22) is a ferroelectric random access memory (FeRAM) component.

8. A method for preventing an occurrence of a power cycle in a System-On-Chip (SOC) architecture (20) from requiring that the SOC be rebooted and re-initialized, the method comprising the steps of:
storing, in a ferroelectric memory component (23) embedded in the SOC (20), an address pointer to an address location in the ferroelectric memory component (23) that contains a next instruction to be executed by a processor embedded in the SOC (20), said next instruction being part of an instruction set currently being executed by the processor (21);
after a power cycle has occurred, when power returns, accessing by the processor (21) said next instruction, the processor (21) using the address pointer to access said next instruction; and
executing, in the processor (21) said next instruction, thereby resuming execution of the instruction set.

9. The method of claim 8, wherein the ferroelectric memory component (23) is a ferroelectric random access memory (FeRAM) component (23).

10. The method of claim 9, wherein the SOC (20) has re-configurable hardware (22) embedded therein, and wherein the method further comprises the step of:
prior to the occurrence of the power cycle, storing a configuration of the re-configurable hardware (22) and current state of the re-configurable hardware (22) in the ferroelectric memory component (23).
